# EUROPEAN PATENT APPLICATION

(11) **EP 2 822 362 A1**
(43) Date of publication of application: **07.01.2015**
(21) Application number: 12826615.2
(22) Date of filing: 30.03.2012
(51) Int. Cl.: H05B 37/02

(54) **LED DRIVE DEVICE AND CONTROL METHOD THEREFOR**

(30) Priority: 02.03.2012 CN 201210054050
(71) Applicant: Suzhou Hetec Electronic Technology Co., Limited, Suzhou, Jiangsu 215200 (CN)
(72) Inventor: ZHANG, Hong, Suzhou Jiangsu 215200 (CN); GU, Xiaobin, Suzhou Jiangsu 215200 (CN); WU, Xiaoming, Suzhou Jiangsu 215200 (CN); CHEN, Laijian, Suzhou Jiangsu 215200 (CN)
(74) Representative: Decamps, Alain René François
(86) International application number: PCT/CN2012/000415
(87) International publication number: WO 2013/127031

(57) **Abstract**

The invention discloses a LED driving device and the control method. The foresaid driving device comprises power converter, microprocessor (5) and LED circuit (6). Wherein, the foresaid power converter comprises impulse transformer (3) and switch control circuit (2). Primary winding at input side of the foresaid impulse transformer (3) connects with rectifier filter circuit (1) by the switch control circuit (2); secondary winding at output side and auxiliary winding connect with power end of the microprocessor (5) by constant voltage control switch. Output end of the foresaid microprocessor (5) connects with LED circuit (6). The LED driving device and the control method provided by this invention collects on/off signal of mechanical lamp by using switch control circuit (2). Light is adjusted by LED circuit (6) driven by the microprocessor (5), and thus heat elimination effect is improved, power consumption is lowered and brightness is enhanced. By this way, better heat elimination effect, lower power consumption and higher brightness are achieved.

## Description

### Technical Field

The invention concerns a driving circuit and its control method, a LED driving device and its control method in particular.

### Background Art

LED (Light Emitting Diode) is a solid semi-conductor component that can directly convert electricity into light. Core of LED is a semi-conductor chip. One end of the chip is attached to a bracket, one end is negative pole, and the other end is connected with positive pole of power supply. Hole takes a dominant position in it. The other end is N-shaped semi-conductor with mainly electronics in it. When the two kinds of semi-conductor are connected together, they form a P-N knot. When current functions on the chip with wire, electronics will be pushed to area P. In area P, electronics will recombine with the hole, and then transmit energy in form of photon, and this is the principle of LED light emitting. Wavelength of light (meaning color of the light) depends on the material forming P-N knot.

Most of the LED driving devices at current market are troubled with insufficient brightness, extremely high power, poor heat elimination effect, fast light attenuation and high cost. Therefore, it is necessary to improve LED driving device and its control method for lowering power consumption and enhancing brightness.

### Contents of the Invention

The technical problem to be solved by this invention is to provide a LED driving device and its control method capable to improve heat elimination effect, lowering power consumption and enhance brightness.

Technical solution adopted to solve the technical problems above by this invention is to provide a LED driving device, comprising power converter, microprocessor and LED circuit. Wherein, the foresaid power converter comprises impulse transformer and switch control circuit. Primary winding at input side of the foresaid impulse transformer connects with rectifier filter circuit by the switch control circuit; secondary winding at output side and auxiliary winding connect with power end of the microprocessor by constant voltage control switch. Output end of the foresaid microprocessor connects with LED circuit.

In the foresaid LED driving device, the foresaid rectifier filter circuit comprises preceding capacitor CX1, rectifier bridge BD1 and primary π -shaped filter circuit. The foresaid π -shaped filter circuit is composed of capacitor C1, capacitor C2 and inductance L1;

In the foresaid LED driving device, the foresaid switch control circuit comprises main control switch frequency chip. Drain electrode end D of the foresaid main control switch frequency chip connects with surge absorber circuit. The foresaid surge absorber circuit is composed of capacitor C3, resistance R4 and diode D4. Two ends of the foresaid surge absorber connect with two ends of the impulse transformer and primary winding;

In the foresaid LED driving device, the foresaid constant voltage control circuit is composed of stabilivolt output circuit and auxiliary voltage control circuit; positive pole of the foresaid stabilivolt output circuit Vo+ connects with one end of the secondary winding by inductance L3, rectifier D6 and impulse transformer, while the negative pole Vo-connects with the other end of secondary winding of the impulse transformer; two ends of the foresaid rectifier D6 connects with filter circuit composed of resistance R6 and capacitor C8 by parallel connection. Two ends of inductance L3 connects with the other end of the secondary winding by output filter capacitor C6 and C7; output end of the rectifier D6 connects with output end of optical couple U2 by constant voltage stabilivolt VR2 and testing resistance R7. Input end U2 of the foresaid optical coupler connects with output end FB of the main control switch frequency chip; the foresaid auxiliary voltage control circuit is composed of diode D5, capacitor C4 and resistance R5. Two ends of the auxiliary winding of the foresaid diode D5, capacitor C4 impulse transformer connect together to form a loop. One end of the foresaid capacitor C4 connects with bypass BP of the main control switch frequency chip by resistance R5, and the other end is for grounding; the bypass BP of the foresaid main control switch frequency chip is in ground connection by capacitor C5;

In the foresaid LED driving device, power end Vcc of the foresaid microprocessor connects with positive pole Vo+ of the stabilivolt output circuit by three-terminal stabilizer permitting connection with stabilivolt output circuit by impulse level judging circuit. The foresaid impulse level judging circuit is composed of diode D1, resistance R1 and R2. The foresaid diode D1 connects with resistance R1 in serial after connecting with resistance R2 in parallel;

In the foresaid LED driving device, output end of the foresaid microprocessor connects with LED circuit by the constant voltage control circuit composed of various groups of twin triode, and each group of the constant control circuit drives a LED circuit;

In the foresaid LED driving device, the foresaid LED circuit comprises three lines of LED strip including CL1, CL2 and CL3. Each line of LED strip is composed of various LED strips connected in parallel and serial;

To solve the technical problems above, this invention provides a control method of LED driving device, comprising the following steps: a) Power converter collects on/off signal of the mechanical switch control lamp; b) Microprocessor receives on/off signal from the power converter, and outputs control signal to perform on/off control on LED circuit.

In control method of the LED driving device above, one interval between "On" and "Off" of the foresaid on/off signal is 0.1∼6 second(s). The foresaid microprocessor receives on/off signal from the power converter by impulse level judging circuit. The foresaid impulse level judging circuit is composed of diode D1, resistance R1 and R2. The foresaid diode D1 and resistance R2 connect with resistance R1 in serial after being connected in parallel.

The invention enjoys the following beneficial effects comparing with the existing technologies: the LED driving device and the control method provided by this invention collects on/off signal of mechanical lamp by using switch control circuit. Light is adjusted by LED circuit driven by the microprocessor, and thus heat elimination effect is improved, power consumption is lowered and brightness is enhanced. By this way, better heat elimination effect, lower power consumption and higher brightness are achieved.

### Description of Figures

Fig. 1 is a schematic diagram of LED driving device circuit of this invention;
Fig. 2 is a schematic diagram of power converter circuit in the LED driving device of this invention;
Fig. 3 is a schematic diagram of microprocessor circuit in the LED driving device of this invention;
Fig. 4 is a schematic diagram of LED circuit on the LED driving device of this invention.

In the figures:
1. Rectifier filter circuit; 2.Switch control circuit; 3. Impulse transformer;
4. Constant voltage control circuit; 5. Microprocessor; 6. LED circuit; 41. Stabilivolt output circuit; 42. Auxiliary voltage control circuit

### Mode of Carrying out the Invention

Further explanation to the invention will be stated below combining with the attached figures and the mode of carrying out the invention.

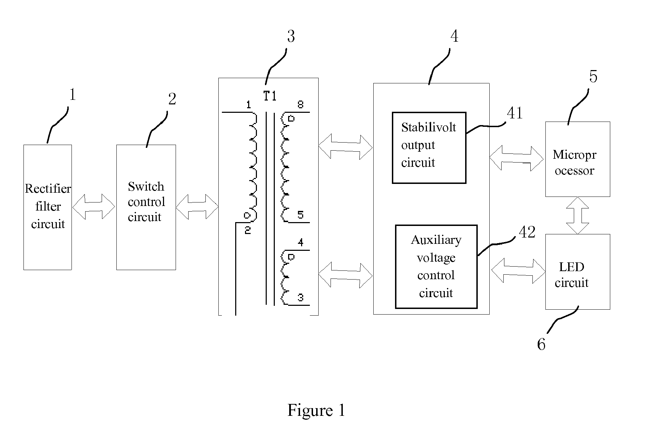

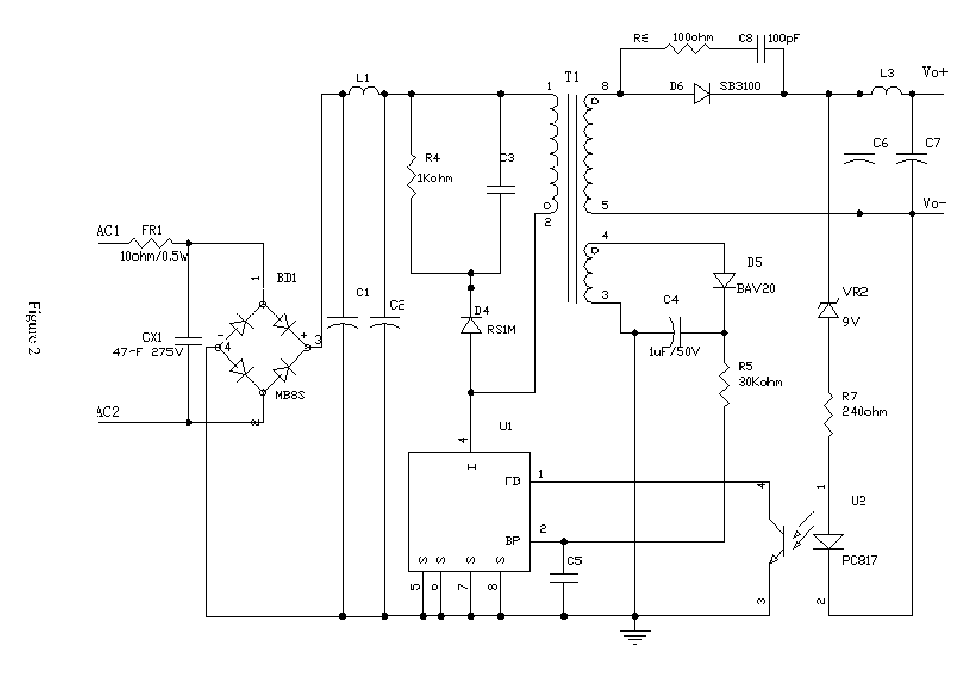

Figure 1 is a schematic diagram of LED driving device circuit of this invention, and figure 2 is a schematic diagram of power converter circuit in the LED driving device of this invention.

As shown in Figure 1 and Figure 2, the principle of this invention: The LED driving device provided by this invention comprises power converter, microprocessor 5 and LED circuit 6. In the device, power end of the microprocessor 5 connects with the power converter, the output end connects with LED circuit 6. The foresaid power converter compromises impulse transformer 3 and switch control circuit 2. Primary winding at input side of the foresaid impulse transformer 3 connects with rectifier filter circuit 1 by the switch control circuit 2; secondary winding at output side and auxiliary winding connect with LED circuit 6 by constant voltage control circuit 4. The power converter inputs 220V AC, and outputs 4-20V DC after conversion with the transformer, and converts to voltage and current needed for operating of LED circuit 6 and microprocessor 5. High frequency switch control circuit 2 can connect with microprocessor 5 to realize power on/off the lamp (within 5 seconds for one interval between "On" and "Off"), to change LED light brightness. Microprocessor 5 can be set to 1-section light control or N-section (sectional digits for lamp brightness) control.

TNY serial chips from PI Company can be selected for the main control switch frequency chip in the switch control circuit 2, e.g. TNY278PN, TNY279PN. The chips include source S, enable EN, bypass BP and drain electrode D, as shown in Figure 2; the drain electrode D of the main control switch frequency chip connects with circuit of surge absorber. The foresaid surge absorber circuit is composed of capacitor C3, resistance R4 and diode D4. Two ends of the foresaid surge absorber circuit connect with the two ends of primary secondary winding of the impulse transformer.

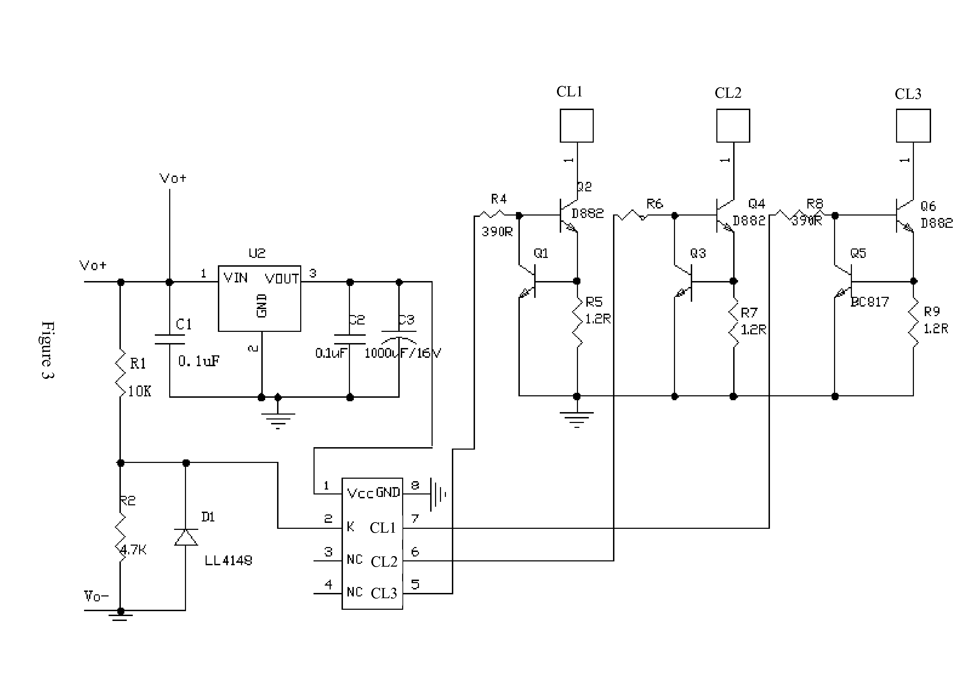

Figure 3 is a schematic diagram of microprocessor circuit in the LED driving device of this invention.

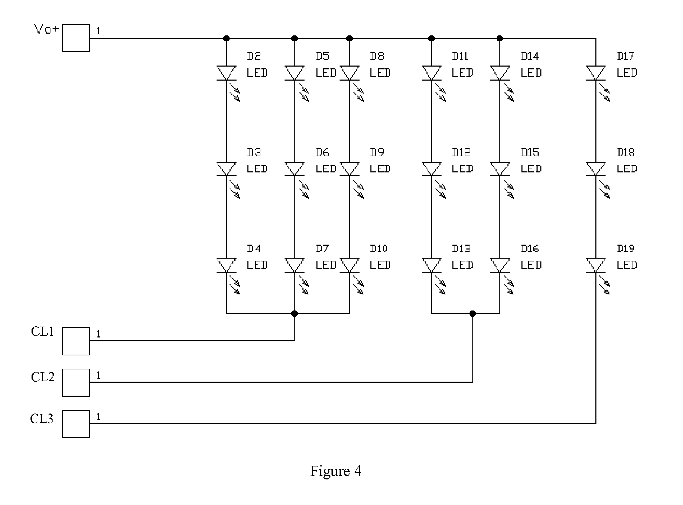

As shown in Figure 3, model of main chip selected for microprocessor 5 is LB308NJ. The main chip enable K (2 pins) externally connects with impulse level judging circuit. The foresaid impulse level judging circuit is composed of diode D1, resistance R1 and R2. The foresaid diode D1 and resistance R2 connect with R1 in serial after being connected in parallel. Power end Vcc of the main chip connects with positive pole Vo+ of the stabilivolt output circuit by U2. U2 is a 5V three-terminal stabilivolt that will convert voltage generated by driving power into 5V voltage needed for controlling normal operation of IC. A 1000uF electrolytic capacitor C3 is externally connected with IC voltage output VCC for continuous power supply for the chips. AC1 and AC2 are AC connecting terminals (220V AC on-off signal) of power controller. In case of power off, there will be no AC input for AC1 and AC2, and normally there is no current for the whole circuit; the circuit composed of R1, R2 and D1 in Figure 3 will generate a low level record to enter the chips, and the electrolytic capacitor C3 will continuously supply power for the chips for couples of seconds. When the driving power performs On-Off-On die to an action of the traditional mechanical switch, pin K of the main chip will receive level change signal captured by the level judging circuit, and thus makes a record and performs on-off control on output three pins CL1/CL2/CL3. Three groups of constant current circuit established by twin triode respective control the three lines of LED output, as shown in Figure 4. By this way, it comes to that in case of different times of actions by the traditional mechanical switch, effect of one line of multiple lines of LED light emitting will be achieved; and that will finally come to achieve lighting effect at different brightness fulfilled by the traditional mechanical switch.

To sum up, this invention provides a LED device and its control method by using inherent mechanical lamp switch to control brightness of the new type of LED. It is to decide a brightness control by "On" and "Off" of the switch. Different brightness is required at a certain place at various period of time. For example, high brightness is required for work, medium brightness is required for entertainment and low brightness is required before going to bed. The same one LED lamp can offer different luminous fluxes for different demands, and its power consumption also varies (High brightness needed high power consumption, and low brightness causes a low power consumption). By this way, unnecessary power consumption is avoided and benefits an environment protection effect.

What mentioned above is only a preferred embodiment of the invention, and the protection scope is not limited to this. Any changes or replacements easily got within the technical scope disclosed in this invention by technicians familiar with this technical field are in the protection scope of this invention. Therefore, the protection scope of the invention is subject to the protection scope of the claims.

## Claims

1. A LED driving device, comprising power converter, microprocessor (5) and LED circuit (6), **characterized in that**: said power converter comprises impulse transformer (3) and switch control circuit (2), primary winding at input side of said impulse transformer (3) connecting with rectifier filter circuit (1) by the switch control circuit (2), secondary winding at output side and auxiliary winding connecting with power end of the microprocessor (5) by constant voltage control switch, output end of the foresaid microprocessor (5) connecting with LED circuit (6).

2. The LED driving device according to claim 1, **characterized in that** said rectifier filter (1) circuit comprises preceding capacitor CX1, rectifier bridge BD1 and primary π -shaped filter circuit, said π -shaped filter circuit being composed of capacitor C1, capacitor C2 and inductance L1.

3. The LED driving according to claim 1, **characterized in that** said switch control circuit (2) comprises main control switch frequency chip, drain electrode end D of said main control switch frequency chip connecting with surge absorber circuit, said surge absorber circuit being composed of capacitor C3, resistance R4 and diode D4, two ends of said surge absorber connecting with two ends of the impulse transformer (3) and primary winding.

4. The LED driving device according to claim 1, **characterized in that** said constant voltage control circuit (4) is composed of stabilivolt output circuit (41) and auxiliary voltage control circuit (42); positive pole of said stabilivolt output circuit (41) Vo+ connects with one end of the secondary winding by inductance L3, rectifier D6 and impulse transformer (3), while the negative pole Vo- connects with the other end of secondary winding of the impulse transformer (3); two ends of said rectifier D6 connects with filter circuit composed of resistance R6 and capacitor C8 by parallel connection, two ends of inductance L3 connecting with the other end of the secondary winding by output filter capacitor C6 and C7, output end of the rectifier D6 connecting with output end of optical couple U2 by constant voltage stabilivolt VR2 and testing resistance R7, input end U2 of said optical coupler connecting with output end FB of the main control switch frequency chip; said auxiliary voltage control circuit (42) being composed of diode D5, capacitor C4 and resistance R5, two ends of the auxiliary winding of the foresaid diode D5, capacitor C4 impulse transformer (3) connecting together to form a loop, one end of said capacitor C4 connecting with bypass BP of the main control switch frequency chip by resistance R5, and the other end being for grounding; the bypass BP of said main control switch frequency chip being in ground connection by capacitor C5.

5. The LED driving device according to claim 4, **characterized in that** power end Vcc of the foresaid microprocessor (5) connects with positive pole Vo+ of the stabilivolt output circuit (41) by three-terminal stabilizer permitting connection with stabilivolt output circuit (41) by impulse level judging circuit, said impulse level judging circuit being composed of diode D1, resistance R1 and R2, said diode D1 connecting with resistance R1 in serial after connecting with resistance R2 in parallel.

6. The LED driving device according to claim 1, **characterized in that** output end of said microprocessor (5) connects with LED circuit (6) by the constant voltage control circuit (4) composed of various groups of twin triode, and each group of the constant control circuit driving a LED circuit (6).

7. The LED driving device according to claim 6, **characterized in that** said LED circuit (6) comprises three lines of LED strip including CL1, CL2 and CL3, each line of LED strip being composed of various LED strips connected in parallel and serial.

8. A control method of LED driving device according to claim 1, **characterized in that** it comprises the following steps:
a) Power converter collects on/off signal of the mechanical switch control lamp;
b) Microprocessor (5) receives on/off signal from the power converter, and outputs control signal to perform on/off control on LED circuit (6).

9. The control method of LED driving device according to claim 8, **characterized in that**: one interval between "On" and "Off" of said on/off signal is 0.1∼6 second(s),said microprocessor (5) receiving on/off signal from the power converter by impulse level judging circuit, said impulse level judging circuit being composed of diode D1, resistance R1 and R2,said diode D1 and resistance R2 connecting with resistance R1 in serial after being connected in parallel.
